# EUROPEAN PATENT SPECIFICATION

(11) **EP 0 239 011 B1**
(45) Date of publication and mention of the grant of the patent: **23.06.1993**
(21) Application number: 87104051.5
(22) Date of filing: 19.03.1987
(51) Int. Cl.: G02C 5/22

(54) **Elastic hinge device for spectacle frames**
Federscharnier für Brillen
Charnière élastique pour lunettes

(30) Priority: 24.03.1986 IT 3065586 U
(43) Date of publication of application: 30.09.1987
(73) Proprietor: VISOTTICA S.p.A., I-31058 Susegana (Province of Treviso) (IT)
(72) Inventor: Montalban, Rinaldo, I-31015 Conegliano Treviso (IT)
(74) Representative: Modiano, Guido, Dr.-Ing.

(56) References cited:
- EP-A- 0 149 230
- EP-A- 0 166 822
- FR-A- 2 466 788
- FR-A- 2 481 471

## Description

The present invention relates to an elastic hinge device, particularly for spectacle frames, which is provided with an additional elastic opening, with a snap closing action and with a snap opening action.

FR-A-2 481 471 discloses spectacle frame hinge having the features as included in the precharacterizing portion of the appended claim 1, and in particular the longitudinal elastically deformable element acts upon a rod element connected to a sliding elbow element with a lower plate which abuts against a flange connected rigidly to the frame when the temple is opened beyond its normal wear position.

The main aim of the present invention is to devise a hinge device for spectacle frames which allows one to perform the additional opening of the rod beyond the position of normal use according to a desired and preset angle.

Within the scope of this aim, a further important object is to devise a hinge device which allows the elastic return of the rod to the opening position once the additional opening is no longer required.

Another important object is to devise a hinge device which allows one to achieve the snap closing and the snap opening to define two positions of stable balance for the stem or rod, the latter being placed respectively on planes approximately parallel and perpendicular to the one of arrangement of the front part.

Another object is to provide a hinge device which is structurally simple, so as to increase the aesthetical characteristics of the rod of the front part of the frame.

Another object is to provide a hinge which is provided with excellent characteristics of resistance to wear.

A further object is to achieve a hinge device which is provided with components which can be quickly assembled.

Not least object is to devise a hinge device, particularly for spectacle frames, which is of modest cost and which can be obtained on ordinary machines.

The object and the aims described above as well as others which will become apparent hereinafter are achieved by an elastic hinge device as defined in the appended claim 1.

Further characteristics and advantages of the invention will become apparent from the description of a particular, but not exclusive, embodiment, illustrated only by way of non-limitative example in the accompanying drawing figures, wherein:
Fig. 1 is a perspective exploded view of the individual components of the hinge device;
Fig. 2 is a view of the assembled hinge in partial cross section along a longitudinal axis;
Fig. 3 is a view similar to figure 2, illustrating the position of additional opening.

With reference to the above described figures, the hinge 1 expediently comprises a box-like body 2, rigidly associated with a terminal end of a stem or rod 3.

The body 2 is provided with a lateral extension substantially equal to the lateral extension of the rod, an end 4 of the body 2 being curved and closed, and being rigidly associated with the plane surface 5 of the rod 3.

At the end 6, opposite to the end 4, the body 2 has two lateral shoulders 7 projecting longitudinally and radiused to the plane surface 5.

By associating the body 2 with the rod 3, a longitudinal seat 8 is defined for an elastically deformable means 9, advantageously composed of a cylindrical helical compression spring.

An abutment element 10, advantageously composed of an L-shaped metallic element, is provided inside the seat 8 and proximate to the end 4.

The dimensions of the tabs of said element 10 are such as to allow both of their free ends to cooperate at the same time with the inner surface of the box-like body 2.

The hinge 1 is also composed of a metal cap 11, preferably provided by an element in punched and bent steel, which is insertable inside the seat 8.

Said cap is provided with two longitudinal lateral shoulders 12, parallel to each other, connected at one end by a plane surface 13 provided with a tooth 14 projecting only on one side beyond the perimetral edges of the shoulders 12.

Said tooth constitutes a means adapted for delimiting the excursion of the cap within the seat 8, said tooth abutting with a step 15 provided at the end 6 of the body 2 and arranged transversely with respect to the shoulders 12.

The plane surface 13 of the cap 11 interacts with a cam 16 having an substantially parallelepipedal shape, associated with the front part of the frame, said cam being positioned between the shoulders 12 and pivotable therebetween.

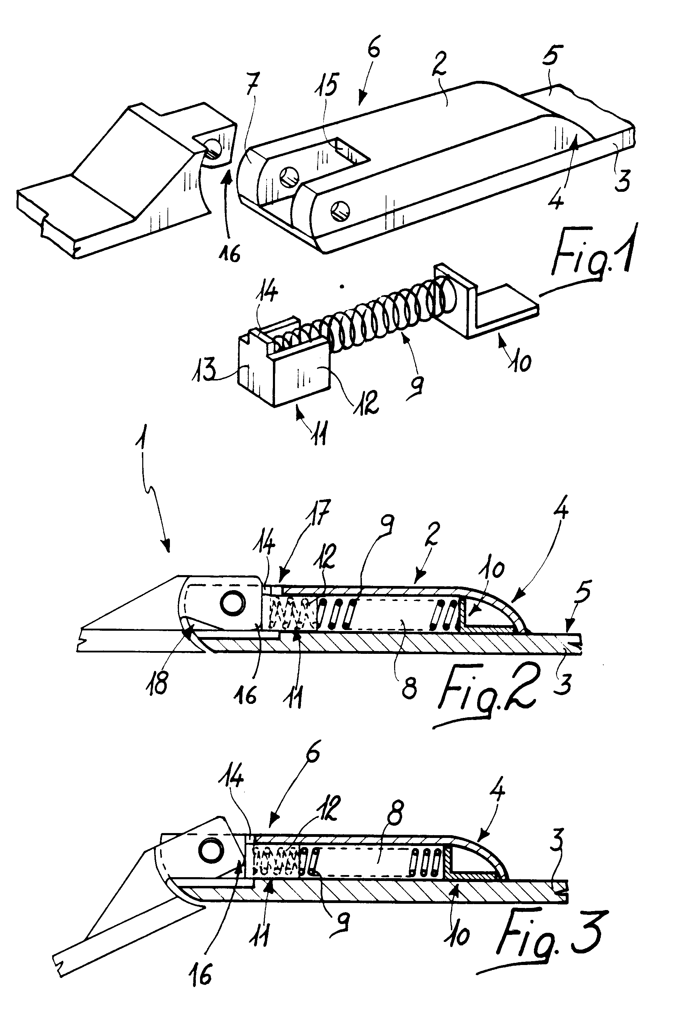

The use of the hinge 1 implies the assembly of the individual parts as follows: once the body 2 is coupled to the surface 5 of the rod 3 as illustrated in Fig. 1, the element 10, the elastically deformable means 9 and the cap 11 are sequentially inserted from the end 6, into the body 2, with the end of the elastic means 9 accommodated between the shoulders 12.

The cam 16 is then hinged between the shoulders 12, and its surfaces interact with the plane surface 13 of the cap 11.

Indeed, Fig. 2 illustrates, as an example, the open position corresponding to the one of normal use of the spectacles.

In said figure it is possible to notice that an interspace 17 is provided between the step 15 and the tooth 14, allowing one to achieve the position of additional opening, illustrated in Figure 3, since the cap 11 can perform an additional longitudinal excursion with the seat 8.

The position of maximum additional opening may thus be preset by providing the dimensions of the components of the hinge so that the interspace 17 allows the cap 11 a longitudinal motion such as to allow the achievement of the two positions of stable balance.

Naturally, the cam 16 and the cap 11 may be made of a very hard material, in order to optimally limit the wear of the components.

Advantageously, the cam 16 is provided with a plane surface 18, which is angled with respect to the plane of arrangement of the surface 5, this preventing interaction with the end of the rod during the condition of extra opening.

It has thus been observed that the invention achieves the intended aims and objects, a hinge having been provided which allows one to perform the additional opening of the rod beyond the normal opening position according to a desired and preset angle.

The hinge furthermore allows the elastic return into the opening position once the additional opening is no longer required, since the spring 9 forces the cap 11 to relocate the cam 16 in a position of stable balance.

The hinge is furthermore structurally very simple, easy and quick to assemble, the box-like body 2 hiding from view the components arranged inside it and thus increasing the aesthetical characteristics of the hinge.

The use of a cap 11 provided from a punched and bent steel element allows a significant reduction of the wear due to the continuous use (significantly reduces wear due to the interaction with the cam 16).

Naturally, the dimensions and the materials of the various components of the hinge may be any according to the requirements.

## Claims

1. An elastic hinge device for opening temples of a spectacle frame beyond their normal wear position, said device comprising a first hinge member arranged to be connected to the front part of said spectacle frame and a second hinge member arranged to be connected to a temple of said spectacle frame, said first hinge member having one hinge lobe provided with at least one cam (16) and being pivotally connected to said second hinge member, said second hinge member comprising an elongated boxlike body (2) having a rectangular U-shaped cross-section and having an open (6) and a closed end (4), said body being provided with two parallel hinge lobes (7) projecting laterally in the longitudinal direction at said open end and defining a transversal recess (15) between them, said body being mounted at the end of a flat rod (3) in such a way that said open end (6) of said boxlike body (2) is positioned at said end of said rod (3) and the opening of the U-shaped cross-section is orientated towards a flat surface of the rod, thus forming a longitudinal enclosure (8), a longitudinal elastically deformable means (9) being housed in said enclosure (8), characterized in that said means (9) interacts at said open end (6) with a cap (11) slidably held in said enclosure (8) and abutting said cam (16) and interacts at said closed end (4) with an abutment element (10) inserted into said enclosure (8), said cam (16) is arranged such as to be able to exert a force onto said cap (11) resulting in a compression of said elastically deformable means (9), when one of the temples is opened beyond its normal wear position and such that the force exerted by said compressed elastically deformable means (9) onto said cap (11) and said cam (16) is able to reset said temple into the normal wear position, and said second hinge member further comprises means (14,15) for delimiting the excursion of the cap (11) in the direction of said force to a predetermined amount.

2. An elastic hinge device according to claim 1, further characterized in that said box-like body (2) has a width equal to that of said rod (3) and said closed end (4) of said boxlike body (2) is formed in the shape of a quarter section of a cylinder.

3. An elastic hinge device according to any of the preceding claims, further characterized in that said elastically deformable means (9) is constituted by a cylindrical helical compression spring.

4. An elastic hinge device according to any of the preceding claims, further characterized in that said abutment element (10) is formed by an element having an L-shaped cross-section, one side being perpendicular to said flat surface of said rod (3).

5. An elastic hinge device according to claims 3 or 4 further characterized in that said cap (11) is formed by a steel element having a substantially rectangular U-shaped cross-section and accommodating one end of said spring (9) between its legs (12).

6. An elastic hinge device according to claim 5, further characterized in that said means (14,15) for delimiting the excursion of the cap (11) is constituted by a nose (14) protruding from the middle part (13) of said cap in such a manner that said nose (14) is engaged between said hinge lobes (7) and abuts said recess (15) when said cap (11) is pushed completely into said enclosure (8).

7. An elastic hinge device according to claim 6, further characterized in that in a wear position of the temples an interspace (17) is present between said tooth (14) and said step (15), thus defining said predetermined amount of excursion of the cap (11) in the direction of said force.

## Patentansprüche

1. Federscharnier zum Öffnen der Bügel eines Brillengestells über ihre normale Trageposition hinaus, mit einem ersten zur Verbindung mit dem Vorderteil des Brillengestells angeordneten Scharnierelement und einem zur Verbindung mit einem Bügel des Brillengestells angeordneten zweiten Scharnierelement, wobei das erste Scharnierelement eine mit mindestens einem Nocken (16) versehene Scharnieröse aufweist und schwenkbar mit dem zweiten Scharnierelement verbunden ist, das zweite Scharnierelement einen langgestreckten kastenartigen Körper (2) mit einem rechteckigen U-förmigen Querschnitt und einem offenen Ende (6) und einem geschlossenen Ende (4) aufweist, der Körper mit zwei parallelen Scharnierösen (7) versehen ist, die seitlich in der Längsrichtung an dem offenen Ende vorspringen und eine Querausnehmung (15) zwischen einander bilden, der Körper an dem Ende eines flachen Bügels (3) derart montiert ist, daß das offene Ende (6) des kastenartigan Körpers (2) an diesem Ende der Stange (3) positioniert ist und die Öffnung des U-förmigen Querschnitts in Richtung auf eine flache Oberfläche des Bügels orientiert ist, wodurch ein Längsgehäuse (8) gebildet wird, in dem elastisch deformierbare Längsmittel (9) angeordnet sind, dadurch gekennzeichnet, daß die Mittel an dem offenen Ende (6) mit einer gleitend in dem Gehäuse (8) gehaltenen und an dem Nocken anliegenden Kappe (11) und an dem geschlossenen Ende (4) mit einem in das Gehäuse (8) eingesetzten Anschlagselement (10) zusammenwirken, daß der Nocken (16) derart angeordnet ist, daß er eine zu einer Komprimierung der elastisch verformbaren Mittel (9) führende Kraft auf die Kappe (11) auswirken kann, wenn einer der Bügel über seine normale Tragposition hinaus geöffnet wird, derart, daß die von dem komprimierten elastisch deformierbaren Mitteln (9) auf die Kappe (11) und den Nocken (16) ausgeübte Kraft in der Lage ist, den Bügel in die normale Tragposition zurückzusetzen, und daß das zweite Scharnierelement weiterhin Mittel (14, 15) zur Begrenzung der Auslenkung der Kappe (11) in der Richtung dieser Kraft auf einen vorbestimmten Betrag aufweist.

2. Federscharnier nach Anspruch 1, weiterhin dadurch gekennzeichnet, daß der kastenartige Körper (2) eine dar Breite des Bügels (3) gleiche Breite aufweist und das geschlossene Ende das kastenartigen Körpers (2) in der Form eines Viertelabschnitts eines Zylinders gebildet ist.

3. Federscharnier nach einem der vorhergehenden Ansprüche, weiterhin dadurch gekennzeichnet, daß die elastisch deformierbaren Mittel (9) durch eine zylindrische Schraubendruckfeder gebildet werden.

4. Federscharnier nach einem der vorhergehenden Ansprüche, weiterhin dadurch gekennzeichnet, daß das Anschlagselement (10) von einem Element mit einem L-förmigen Querschnitt gebildet wird, dessen eine Seite senkrecht zu der flachen Oberfläche des Bügels (3) verläuft.

5. Federscharnier nach Anspruch 3 oder 4, weiterhin dadurch gekennzeichnet, daß die Kappe (11) durch ein Stahlelement mit einem im wesentlichen rechteckigen U-förmigen Querschnitt gebildet ist und ein Ende der Feder (9) zwischen ihren Schenkeln (12) unterbringt.

6. Federscharnier nach Anspruch 5, weiterhin dadurch gekennzeichnet, daß die Mittel (14, 15) zur Begrenzung der Auslenkung der Kappe (11) durch eine von dem Mittelteil (13) der Kappe derart vorspringenden Nase (14) gebildet werden, daß die Nase (14) zwischen den Scharnierösen (7) eingreift und an der Ausnehmung (15) anliegt, wenn die Kappe vollständig in das Gehäuse (8) eingeschoben wird.

7. Federscharnier nach Anspruch 6, weiterhin dadurch gekennzeichnet, daß in einer Trageposition der Bügel ein Zwischenraum (17) zwischen dem Zahn (14) und dem Steg (15) vorhanden ist, der auf diese Weise den vorbestimmten Betrag der Auslenkung der Kappe (11) in der Richtung der Kraft definiert.

## Revendications

1. Dispositif de charnière élastique pour ouvrir les branches d'une monture de lunettes au-delà de leur position normale d'utilisation, le dispositif comprenant un premier élément de charnière prévu pour être relié à la partie avant de ladite monture de lunettes et un second élément de charnière prévu pour être relié à une branche de ladite monture de lunettes, ledit premier élément de charnière comprenant un lobe de charnière muni d'au moins une came (16) et étant relié de façon pivotante audit second élément de charnière, ledit second élément de charnière comprenant un corps allongé en forme de boîte (2) de section rectangulaire en forme de U et comportant une extrémité ouverte (6) et une extrémité fermée (4), ledit corps étant muni de deux lobes de charnière (7) parallèles faisant saillie latéralement en direction longitudinale au niveau de ladite extrémité ouverte et définissant un évidement transversal (15) entre eux, ledit corps étant monté à l'extrémité d'une tige plate (3) de manière que ladite extrémité ouverte (6) dudit corps en forme de boîte (2) soit positionnée à ladite extrémité de ladite tige (3) et que l'ouverture de la section en forme de U soit orientée en direction d'une surface plate de la tige, formant ainsi une enceinte longitudinale (8), un moyen déformable élastiquement en direction longitudinale (9) étant logé dans ladite enceinte (8), caractérisé en ce que ledit moyen (9) coopère au niveau de ladite extrémité ouverte (6) avec un capuchon (11) qui est maintenu de façon coulissante dans ladite enceinte (8) et vient buter contre ladite came (16) et coopère au niveau de ladite extrémité fermée (4) avec un élément de butée (10) inséré dans ladite enceinte (8), ladite came (16) étant agencée de manière à pouvoir exercer une force sur ledit capuchon (11) qui se traduit par une compression dudit moyen élastiquement déformable (9) quand l'une des branches est ouverte au-delà de sa position normale d'utilisation, et de manière que la force exercée par ledit moyen élastiquement déformable (9) comprimé sur ledit capuchon (11) et sur ladite came (16) soit capable de ramener ladite branche vers sa position normale d'utilisation, et ledit second élément de charnière comprend en outre des moyens (14, 15) pour délimiter l'excursion du capuchon (11) dans la direction de ladite force sur une distance prédéterminée.

2. Dispositif de charnière élastique selon la revendication 1, caractérisé en outre en ce que ledit corps en forme de boîte (2) a une largeur égale à celle de ladite tige (3) et ladite extrémité fermée (4) dudit corps en forme de boîte (2) est conformée sous la forme d'un quart de section de cylindre

3. Dispositif de charnière élastique selon l'une quelconque des revendications précédentes, caractérisé en outre en ce que ledit moyen élastiquement déformable (9) est constitué par un ressort de compression hélicoïdal cylindrique.

4. Dispositif de charnière élastique selon l'une quelconque des revendications précédentes, caractérisé en outre en ce que ledit élément de butée (10) est formé par un élément de section en L, dont un côté est perpendiculaire à ladite surface plate de ladite tige (3).

5. Dispositif de charnière élastique selon la revendication 3 ou 4, caractérisé en outre en ce que ledit capuchon (11) est formé par un élément en acier de section sensiblement rectangulaire en forme de U et recevant une extrémité dudit ressort (9) entre ses branches (12).

6. Dispositif de charnière élastique selon la revendication 5, caractérisé en outre en ce que lesdits moyens (14, 15) pour délimiter l'excursion du capuchon (11) sont constitués par une saillie (14) s'étendant depuis la partie centrale (13) dudit capuchon de manière que ladite saillie (14) s'engage entre lesdits lobes de charnière (7) et vienne buter contre ledit évidement (15) quand ledit capuchon (11) est poussé complètement à l'intérieur de ladite enceinte (8).

7. Dispositif de charnière élastique selon la revendication 6, caractérisé en outre en ce que lorsque les branches sont dans la position d'utilisation, un espace intermédiaire (17) est présent entre ladite dent (14) et ledit gradin (15), définissant ainsi la quantité prédéterminée d'excursion du capuchon (11) dans la direction de ladite force.
